# EUROPÄISCHE PATENTSCHRIFT

(11) **EP 3 837 765 B1**
(45) Veröffentlichungstag und Bekanntmachung des Hinweises auf die Patenterteilung: **22.03.2023**
(21) Anmeldenummer: 19758636.5
(22) Anmeldetag: 09.08.2019
(51) Int. Cl.: H02S 40/10

(54) **VERFAHREN UND ANORDNUNG ZUR REDUZIERUNG DER FEUCHTEBILDUNG AN EINER DIELEKTRISCHEN OBERFLÄCHE EINES OBJEKTS**
METHOD AND ARRANGEMENT FOR REDUCING THE BUILDUP OF MOISTURE ON A DIELECTRIC SURFACE OF AN OBJECT
PROCÉDÉ ET AGENCEMENT POUR RÉDUIRE LA FORMATION D'HUMIDITÉ SUR UNE SURFACE DIÉLECTRIQUE D'UN OBJET

(30) Priorität: 14.08.2018 DE 102018213657
(43) Veröffentlichungstag der Anmeldung: 23.06.2021
(73) Patentinhaber: Fraunhofer-Gesellschaft zur Förderung der angewandten Forschung e.V., 80686 München (DE)
(72) Erfinder: NAUMANN, Volker, 06120 Halle (Saale) (DE); ILSE, Klemens, 06210 Halle (Saale) (DE); HAGENDORF, Christian, 06120 Halle (Saale) (DE)
(74) Vertreter: Gagel, Roland
(86) Internationale Anmeldenummer: PCT/EP2019/071448
(87) Internationale Veröffentlichungsnummer: WO 2020/035414

(56) Entgegenhaltungen:
- WO-A1-2011/149116
- DE-U1-202007 002 026
- US-A- 4 831 493

## Beschreibung

### Technisches Anwendungsgebiet

Die vorliegende Erfindung betrifft ein Verfahren zur Reduzierung der Feuchtebildung an einer dielektrischen Oberfläche eines Objekts, insbesondere an der Oberfläche eines Photovoltaikmoduls, bei dem die Oberfläche mit einer steuerbaren Heizeinrichtung zeitweise beheizt wird. Die Erfindung betrifft auch eine Anordnung zur Reduzierung der Feuchtebildung an der Oberfläche eines Objekts sowie ein Photovoltaikmodul mit einer derartigen Anordnung.

Photovoltaikmodule (PV-Module) unterliegen unter bestimmten klimatischen Standortbedingungen der Verschmutzung durch Ablagerung von Staubpartikeln. Bei PV-Modulen bewirkt diese Verschmutzung Leistungsverluste, weil es durch die Verschmutzung zur Abschattung von einfallendem Licht kommt. Dieser Verschmutzungseffekt wird in der Literatur auch als Dusting oder Soiling bezeichnet und tritt nicht nur bei Photovoltaikmodulen auf. Soiling stellt für PV-Anlagen vor allem in ariden Klimaten ein Problem dar, in denen einerseits die Staubkonzentration in der Luft oft hoch ist und andererseits wenig natürliche Reinigung durch Niederschläge erfolgt. Dennoch kommt es gerade auch oft an ariden Standorten zum Festbacken von Staub durch Einwirkung von Feuchtigkeit bei Betauung der Glasoberflächen der PV-Module. Diese Betauung findet oft nachts oder in den frühen Morgenstunden vor Sonnenaufgang statt, weil dann die Temperatur der Moduloberfläche bei klarem Wetter durch Wärmestrahlungs-Emission gegen den kalten Himmel unter die Umgebungstemperatur (Lufttemperatur) absinkt, während die relative Luftfeuchte erhöht ist. Erst diese Feuchteeinwirkung führt zum Festbacken der Staubpartikel an der Oberfläche, wodurch sie nicht mehr auf natürlichem Wege, beispielsweise durch Wind, wieder abgetragen werden können.

### Stand der Technik

Zur Reduzierung des Verschmutzungsgrades von PV-Modulen werden die Module bisher in regelmäßigen Zeitintervallen gereinigt. Die Reinigung erfolgt manuell oder maschinell, wobei sowohl trockene als auch Wasser-basierte Verfahren bekannt sind. Ohne eine derartige Reinigung können je nach Standort Leistungsverlustraten der PV-Module von 0,5 bis zu 1% oder mehr pro Tag auftreten. Diese Reinigung ist jedoch auch ein beträchtlicher Kostenfaktor und führt zu einer signifikanten Erhöhung der Anlagenbetriebskosten. Bereits eine Reduktion der erforderlichen Reinigungszyklen wirkt sich signifikant mindernd auf die Kosten der Energieerzeugung (LCOE- Levelized Cost Of Energy) aus. Der alternative Einsatz von fest installierten Reinigungsrobotern zur mechanischen Entstaubung lohnt sich finanziell nur unter bestimmten Randbedingungen und birgt zudem eine Fehleranfälligkeit aufgrund vieler beweglicher Komponenten, deren Zuverlässigkeit in staubiger Umgebung beeinträchtigt ist.

Weiterhin sind Beschichtungen für PV-Glasoberflächen bekannt, die die Haftkräfte zwischen Staubpartikeln und Oberfläche nachhaltig reduzieren sollen. Dadurch sollen die Kosten für die erforderliche Reinigung durch verlängerte Reinigungsintervalle und die durchschnittlichen Leistungsverluste durch geringere Soiling-Raten verringert werden. Es wurde jedoch festgestellt, dass die bisher verfügbaren Glasbeschichtungen meist nur in sehr trockenen Umgebungen, in denen keine oder nur selten Betauung stattfindet, eine signifikante Wirkung entfalten. Sobald die Moduloberflächen in die Nähe des Taupunkts abkühlen, weisen auch beschichtete Glasoberflächen ähnliche Soiling-Raten wie unbeschichtete Gläser auf. Dabei sind Temperaturdifferenzen von nur wenigen Kelvin entscheidend.

Ein weiterer bekannter Ansatz stellt die aktive Beheizung der Module bzw. der Moduloberflächen dar. Benötigte Heizleistungen liegen in der Größenordnung von mindestens 10W/m². Nachteil der aktiven Beheizung ist der dafür notwendige Energieverbrauch. Bei Heizmethoden, die nur mittels absoluter Temperaturen bzw. Temperaturdifferenzen, mittels relativer Umgebungsluftfeuchte oder gar nur zeitlich gesteuert sind, übertrifft die benötigte Energie den Ertragsgewinn bzw. die Kosteneinsparungen aufgrund verringerter Soiling-Raten.

Aus der DE 102 29 628 A1 sind eine Vorrichtung und ein Verfahren zur Vermeidung von Kondensation auf einer Oberfläche bekannt, bei der die Oberflächentemperatur und die Taupunkttemperatur der umgebenden Atmosphäre gemessen werden, um damit eine Beheizung der Objektoberfläche zur Vermeidung einer Betauung zu steuern. Ein derartiges indirektes Verfahren verfügt jedoch nur über eine relativ geringe Genauigkeit, weil unter anderem Schmutz, insbesondere mineralische Staubanlagerungen, die oftmals hygroskopische Wirkung haben, den relativen Oberflächenfeuchtegrad gegenüber dem theoretischen Wert erhöht. Damit eignet sich diese indirekte Ermittlung der Oberflächenfeuchte nicht, um die Beheizung von PV-Modulen zur Vermeidung von Betauung zuverlässig zu regeln.

Die US 4 831 493 A beschreibt einen Feuchtigkeitssensor für die Windschutzscheibe eines Kraftfahrzeugs, bei dem auf die Windschutzscheibe zwei fingerförmig ineinander greifende Elektroden aufgebracht werden, über die ein geeignetes Spannungssignal variierender Amplitude übertragen wird. Das Spannungssignal wird von einem Signalgenerator erzeugt und von einem Signalempfänger empfangen. Durch die Kombination aus einer Kapazität, die durch die beiden ineinander greifenden Elektroden gebildet wird, und einem Widerstand bei Vorliegen von Feuchte zwischen den Elektroden, wird das übertragene Signal bzw. dessen Signalform bei trockener Windschutzscheibe in anderer Weise beeinflusst als bei nasser Windschutzscheibe. Diese Veränderung des Signals wird detektiert und in Abhängigkeit von der Veränderung der Scheibenwischermotor gesteuert.

Die Aufgabe der vorliegenden Erfindung besteht darin, ein Verfahren sowie eine Anordnung anzugeben, mit denen die Feuchtebildung an einer dielektrischen Oberfläche eines Objekts mit geringerem Energieeinsatz als bei den bisher hierzu bekannten Verfahren zuverlässig reduziert oder begrenzt werden kann. Das Verfahren und die Vorrichtung sollen sich insbesondere zur Vermeidung der Betauung von Photovoltaikmodulen eignen.

### Darstellung der Erfindung

Die Aufgabe wird mit dem Verfahren und der Anordnung gemäß den Patentansprüchen 1 und 5 gelöst. Vorteilhafte Ausgestaltungen des Verfahrens sowie der Anordnung sind Gegenstand der abhängigen Patentansprüche oder lassen sich der nachfolgenden Beschreibung sowie dem Ausführungsbeispiel entnehmen.

Bei dem vorgeschlagenen Verfahren zur Reduzierung der Feuchtebildung an einer dielektrischen Oberfläche eines Objekts wird die Oberfläche mit einer steuerbaren Heizeinrichtung zeitweise beheizt, die in Abhängigkeit von der relativen Oberflächenfeuchte betrieben wird. Das Verfahren zeichnet sich dadurch aus, dass die Ermittlung der relativen Oberflächenfeuchte auf Basis einer elektrischen Leichtfähigkeitsmessung erfolgt, bei der zwischen wenigstens zwei auf der Oberfläche in einem Abstand zueinander applizierten Elektroden oder zwischen einer auf der Oberfläche applizierten Elektrode und einem als weiterer Elektrode an der Oberfläche nutzbaren Bestandteil des Objekts eine elektrische Spannung angelegt und ein Stromfluss über die Elektroden detektiert und/oder gemessen wird. Bei dem als weiterer Elektrode an der Oberfläche nutzbaren Bestandteil des Objekts kann es sich im Falle von PV-Modulen beispielsweise um den geerdeten metallischen Rahmen handeln. Die Heizeinrichtung wird dann in Abhängigkeit von dem detektierten und/oder gemessenen Stromfluss gesteuert oder geregelt, um die Feuchtebildung zu reduzieren oder zu begrenzen. Bei der angelegten Spannung handelt es sich vorzugsweise um eine Gleichspannung. Es kann sich auch um eine derart niederfrequente Wechselspannung handeln, dass damit der ohmsche Widerstand zwischen den Elektroden gemessen werden kann.

Die Heizeinrichtung kann hierbei so gesteuert werden, dass sie bei Überschreiten eines vorgegebenen Schwellwertes des Stromflusses die Oberfläche beheizt bis der Stromfluss wieder unter den Schwellwert abgefallen ist. Die Steuerung kann in diesem Fall durch einfache An- und Abschaltung der Heizeinrichtung erfolgen. Die Heizeinrichtung kann auch in Abhängigkeit von dem gemessenen Stromfluss geregelt werden, um einen vorgegebenen Wert des Stromflusses einzuhalten. Dies kann durch wiederholtes An- und Abschalten der Heizeinrichtung erreicht werden, erfolgt jedoch vorzugsweise durch eine Regelung der Heizleistung der Heizeinrichtung, beispielsweise durch eine Regelung der Stromstärke einer auf Widerstandsheizung basierenden Heizeinrichtung. Der Wert oder Schwellwert des Stromflusses für die Steuerung/Regelung der Heizeinrichtung wird bei dem vorgeschlagenen Verfahren so gewählt, dass er einer relativen Oberflächenfeuchte im Bereich von 50% bis 70%, vorzugsweise im Bereich von 60% ± 5%, entspricht.

Bei dem vorgeschlagenen Verfahren und der zugehörigen Anordnung wird ausgenutzt, dass sich die elektrische Leitfähigkeit einer dielektrischen Oberfläche, insbesondere einer Glasoberfläche wie bei vielen PV-Modulen, mit dem Wasser- bzw. Feuchtegehalt der Oberfläche ändert. Hierbei wurde herausgefunden, dass die elektrische Leitfähigkeit der Oberfläche überraschenderweise sehr sensitiv auf eine Änderung der relativen Oberflächenfeuchte - bzw. der Oberflächentemperatur bei konstanter Umgebungsfeuchte - reagiert. Die relative Oberflächenfeuchte bestimmt sich prinzipiell aus der Konstanz des Produkts aus relativer Feuchte und Sättigungswasserdampfdruck. Der Sättigungswasserdampfdruck ist bekannt und nur abhängig von der Luft- bzw. Oberflächentemperatur. Die Oberflächenleitfähigkeit wird beim vorliegenden Verfahren durch die Strommessung zwischen zwei Elektroden bei einer angelegten elektrischen Spannung bestimmt. Der gemessene Stromfluss stellt damit ein genaues quantitatives Maß für die relative Oberflächenfeuchte direkt am relevanten Objekt bzw. an dessen Oberfläche dar. In Versuchen zeigte sich, dass die elektrische Leitfähigkeit schon deutlich vor sichtbarer Tröpfchenbildung (Beschlagen) der Oberfläche signifikant zu steigen beginnt, so dass durch die Steuerung bzw. Regelung auf Basis des gemessenen Stromflusses und des bei dem vorgeschlagenen Verfahren gewählten Wertes oder Schwellwertes des Stromflusses die Feuchtebildung an der Oberfläche zuverlässig reduziert, insbesondere eine Betauung von Oberflächen, bspw. von Photovoltaikmodulen, im Outdoor-Bereich zuverlässig vermieden werden kann.

Durch die abgestimmte Kombination von Feuchtemessung und Heizsteuerung oder -regelung wird ein minimaler Energieaufwand zur Reduzierung oder Begrenzung der Feuchtebildung realisiert. Die Heizeinrichtung wird dadurch nur für eine minimal erforderliche Erhöhung der Oberflächentemperatur betrieben, die zur Reduzierung oder Begrenzung der Feuchtebildung, insbesondere zur Vermeidung der Betauung, notwendig ist. Diese zeitgenaue und ressourcen-optimierte Steuerung oder Regelung ermöglicht eine Reduzierung oder Begrenzung der Feuchtebildung mit reduzierter Energie und reduzierten Kosten. Die Heizeinrichtung wird nur exakt in den Phasen betrieben, in denen Feuchtigkeit bzw. Tau beginnen, sich auf der Oberfläche zu sammeln - und auch nur in einem Maße, das für die Reduzierung oder Begrenzung der Feuchtebildung gerade erforderlich ist. Mit dem Verfahren und der zugehörigen Anordnung lässt sich vor allem die Oberfläche von PV-Modulen während Tau-Wetterlagen ausreichend trocken halten, damit Staubpartikel nicht anbacken. Weiterhin kann mit dem Verfahren und der Anordnung in Klimaten, in denen Betauung die einzige regelmäßige Quelle von Oberflächenfeuchte darstellt, auch die Anfälligkeit von PV-Modulen gegenüber Potential-induzierter Degradation (PID) stark reduziert werden. Denn PID tritt nur dann verstärkt auf, wenn eine PV-Anlage morgens regelmäßig mit feuchten Moduloberflächen in Betrieb geht, weil die Oberfläche nur durch die Feuchtigkeit regelmäßig ganzflächig geerdet wird. Das Verfahren und die Anordnung sind jedoch auch für Oberflächen anderer Objekte einsetzbar, an denen eine Feuchtebildung, insbesondere durch Betauung, verhindert, reduziert oder begrenzt werden soll.

Die Messung des Stromflusses zwischen den Elektroden bzw. das Anlegen der elektrischen Spannung an die Elektroden an der Oberfläche des Objekts kann dabei kontinuierlich oder auch in kurzen zeitlichen Abständen erfolgen. Es besteht auch die Möglichkeit, diese Messung nur in Zeiträumen durchzuführen, in denen eine Gefahr einer Feuchtebildung an der Oberfläche besteht, bei Objekten im Outdoor-Bereich insbesondere in Zeiträumen, in denen eine Betauung stattfinden kann.

Die vorgeschlagene Anordnung zur Reduzierung der Feuchtebildung an der Oberfläche eines Objekts, insbesondere eines Photovoltaikmoduls, weist somit eine steuerbare Heizeinrichtung, mit der die Oberfläche des Objekts beheizbar ist, eine Messanordnung zur Bestimmung der elektrischen Leitfähigkeit der Oberfläche sowie eine Steuer- und/oder Regeleinrichtung auf. Die Messanordnung ist aus wenigstens zwei an der Oberfläche des Objekts in einem Abstand zueinander applizierten Elektroden oder aus wenigstens einer auf der Oberfläche applizierten Elektrode und einem als weiterer Elektrode an der Oberfläche nutzbaren Bestandteil des Objekts, einer mit den Elektroden verbundenen elektrischen Spannungsquelle, vorzugsweise einer Gleichspannungsquelle oder einer ausreichend niederfrequenten Wechselspannungsquelle, über die wenigstens zeitweise eine elektrische Spannung an die Elektroden angelegt werden kann, und einer Strommesseinrichtung zur Messung eines Stromflusses über die Elektroden gebildet. Die Steuer- und/oder Regeleinrichtung ist so ausgebildet, dass sie die Heizeinrichtung in Abhängigkeit von dem mit der Messanordnung gemessenen Stromfluss steuert und/oder regelt, um die Feuchtebildung an der Oberfläche des Objekts zu reduzieren oder zu begrenzen. Die Steuer- und/oder Regeleinrichtung ist dabei so ausgebildet, dass sie die Heizeinrichtung gemäß dem vorgeschlagenen Verfahren steuert und/oder regelt.

Die Heizeinrichtung der Anordnung weist für den Einsatz der Anordnung an einem Photovoltaikmodul vorzugsweise eine Heizspannungsquelle auf, die so mit den elektrischen Anschlüssen des Photovoltaikmoduls, die bei Sonnenbestrahlung zur Stromabnahme dienen, verbunden ist, dass das Photovoltaikmodul bei Bedarf über die Heizspannungsquelle in Durchlassrichtung bestromt werden kann. Durch diesen Stromfluss in Durchlassrichtung wird dann die benötigte Heizwirkung im Photovoltaikmodul erzielt.

Das vorgeschlagene Verfahren und die vorgeschlagene Anordnung bieten besondere Vorteile bei Objekten, bei denen eine oberflächliche Anlagerung von Staub und dessen Festbacken durch Feuchteeinwirkung die Funktionalität des Objekts oder von Bestandteilen des Objekts nachteilig beeinflusst. Großes Anwendungspotential ist in der Photovoltaik vorhanden, da PV-Module in zunehmendem Maße in staubigen Umgebungen installiert werden. Die Klimabedingungen sind dort oft so, dass einerseits keine regelmäßigen Regenereignisse auftreten, nachts aber durch eine erhöhte relative Luftfeuchte und Auskühlen der Module die Oberflächen betauen. Eine konkrete beispielhafte Anwendung ist die Ausrüstung von PV-Kleinanlagen (Inselsysteme) auf Laternenmasten zur Versorgung einer Straßenbeleuchtung unter den beschriebenen Umweltbedingungen.

### Kurze Beschreibung der Zeichnungen

Das vorgeschlagene Verfahren und die zugehörige Anordnung werden nachfolgend anhand eines Ausführungsbeispiels in Verbindung mit den Zeichnungen nochmals erläutert. Hierbei zeigen:
- Fig. 1: ein Beispiel für den Einsatz des Verfahrens und der Anordnung an einem PV-Modul;
- Fig. 2: eine beispielhafte Messung eines an einer sauberen Solarmoduloberfläche gemessenen Stroms zwischen zwei auf die Oberfläche aufgebrachten Metallelektroden in Abhängigkeit der Zeit bei Abkühlung und anschließender Erwärmung der Oberfläche; und
- Fig. 3: eine beispielhafte Messung des Stroms zwischen zwei auf der Oberfläche eines Solarmoduls aufgebrachten Metallelektroden in Abhängigkeit von der relativen Oberflächenfeuchte bei unterschiedlichen Umgebungsbedingungen.

### Wege zur Ausführung der Erfindung

Im Folgenden werden das vorgeschlagene Verfahren und die zugehörige Anordnung am Beispiel der Betauung eines PV-Moduls erläutert. Selbstverständlich lassen sich das Verfahren und die Anordnung jedoch auch an anderen Objektoberflächen zur Reduzierung oder Begrenzung einer Feuchtebildung einsetzen. Bei dem vorgeschlagenen Verfahren wird die elektrische Oberflächenleitfähigkeit als Maß für die relative Oberflächenfeuchte gemessen und als Regelungsparameter für die aktive Beheizung der PV-Moduloberfläche eingesetzt. Durch die abgestimmte Kombination von Feuchtemessung und Heizregelung wird ein minimaler Energieaufwand zur Verminderung von Feuchtebildung und damit Soiling realisiert. Die wesentlichen Komponenten stellen bei diesem Beispiel die Feuchtigkeitssensorik, die sensitive Parametrisierung für den Regelalgorithmus sowie die kostengünstige elektrische Beheizung dar.

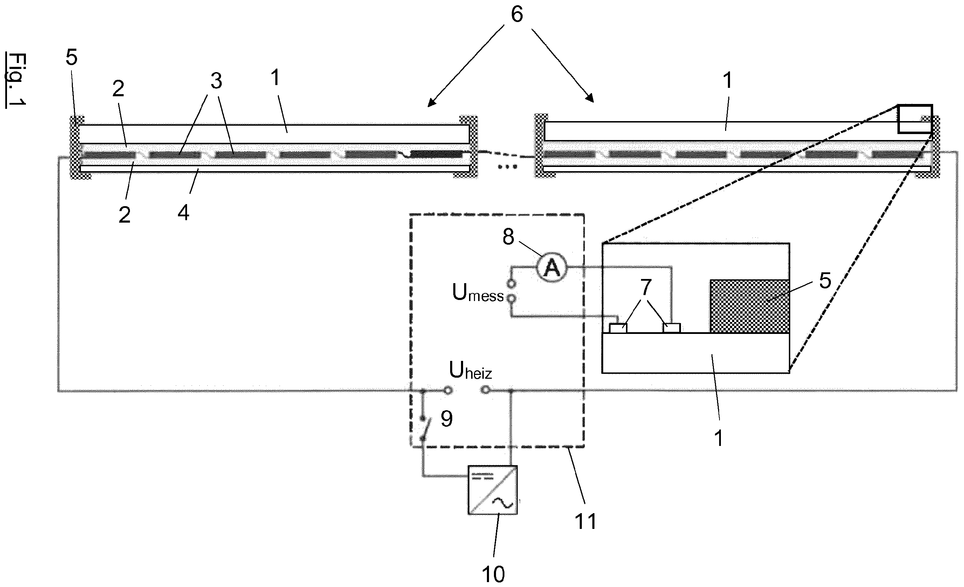

Figur 1 zeigt hierzu eine Querschnittsdarstellung mehrerer Photovoltaikmodule 6, von denen in der Figur im oberen Teil lediglich zwei zu erkennen sind. Die PV-Module 6 weisen jeweils vorderseitig ein Modulglas 1, an dem die Feuchtebildung begrenzt oder reduziert bzw. die Betauung verhindert werden soll, über mehreren miteinander verschalteten Solarzellen 3 auf, die zwischen ein Verkapselungsmaterial 2 (Polymer) eingebettet sind. Die Rückseite der PV-Module 6 ist mit einer Rückseitenfolie 4 bedeckt. Die PV-Module 6 sind jeweils in einem Modulrahmen 5 fixiert. Ein derartiger Aufbau der PV-Module ist aus dem Stand der Technik bekannt.

Die Realisierung der Feuchtigkeitssensorik erfolgt im vorliegenden Beispiel durch Aufbringen von zwei Metallkontaktstreifen am Rand des Modulglases 1 eines oder mehrerer der PV-Module 6, wie dies im vorliegenden Beispiel am rechten PV-Modul der Figur 1 in vergrößerter Darstellung erkennbar ist. Die beiden Metallkontaktstreifen bilden die beiden Elektroden 7 für die Messanordnung. Wie im unteren Teil der Figur 1 erkennbar ist, sind die beiden Elektroden 7 in diesem Beispiel mit einer Gleichspannungsquelle Uₘₑₛₛ verbunden, über die sie mit einer Gleichspannung beaufschlagt werden. Über eine Strommesseinrichtung 8 wird ein über die Elektroden 7 fließender Gleichstrom gemessen, der bei beginnender Feuchtebildung einsetzt oder ansteigt.

Der Abstand zwischen den Elektroden beträgt beispielsweise zwischen 3 mm und 10 cm und die Länge der Elektroden bzw. einer Elektrode senkrecht zu dem Abstand beispielsweise zwischen 2 cm und 3 m. Die elektrische Spannung zwischen den Elektroden liegt für die Durchführung einer Messung vorzugsweise im Bereich von 1 V bis 120 V.

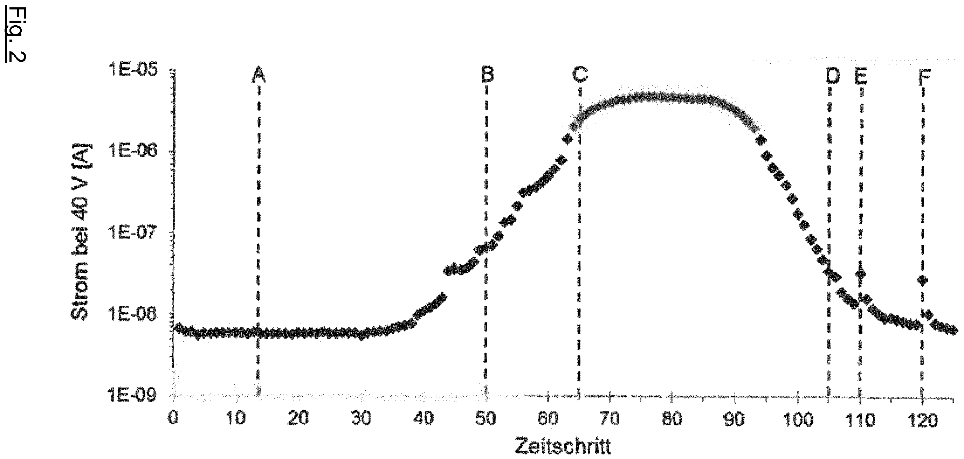

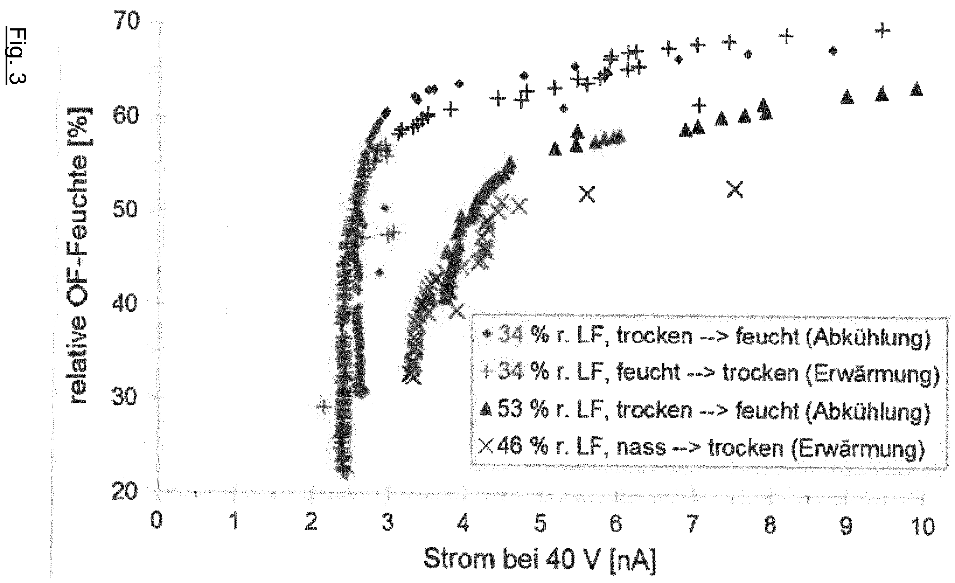

Der gemessene Stromfluss stellt hierbei ein überraschend sensitives Maß für die Änderung der Oberflächenfeuchte dar. Figur 2 zeigt hierzu eine beispielhafte Messung des zwischen den beiden Elektroden gemessenen Stroms in Abhängigkeit von der Oberflächenfeuchte. Hierzu wurde der Strom zwischen den beiden Metallelektroden während eines Betauungstests auf einer sauberen PV- bzw. Solarmoduloberfläche bei 23°C Umgebungstemperatur und 45% relativer Luftfeuchte gemessen. Auf der x-Achse sind Zeitschritte angegeben, von denen ein Zeitschritt 10 Sekunden entspricht. Im Verlauf der Messung wurde zum Zeitpunkt A eine Kühlung de des Solarmoduls begonnen. Bei Zeitpunkt B beginnt dann das Beschlagen der Glasoberfläche des Solarmoduls. Zum Zeitpunkt C wurde die Kühlung abgeschaltet. Bei Zeitpunkt D fühlt sich die Glasoberfläche wieder trocken an. Zu den Zeitpunkten E und F wurde die Oberfläche testweise kurz mit Atemluft angeblasen. Aus dieser Messung ist ersichtlich, dass der Stromfluss bzw. die elektrische Leitfähigkeit schon deutlich vor sichtbarer Tröpfchenbildung (Beschlagen) signifikant zu steigen beginnt. Auf Basis umfangreicher Labor-Staubtests wurde festgestellt, dass schon bei zunehmender relativer Umgebungsluftfeuchte - jedoch noch ohne Betauung - die Haftung von Staubpartikeln an Glasoberflächen weitgehend unabhängig von der Staubart zunimmt. Mit dem hier beschriebenen Verfahren ist man in der Lage, auch geringste Anstiege der relativen Oberflächenfeuchte im relevanten Bereich um 60% zu detektieren. In Laborversuchen wurde festgestellt, dass der dargestellte Zusammenhang zwischen elektrischer Oberflächenleitfähigkeit und relativer Oberflächenfeuchte über einen weiten Bereich der relativen Umgebungsluftfeuchte gültig und somit robust für die Freifeldanwendung ist. Figur 3 zeigt hierzu eine beispielhafte Messung, bei der der Strom zwischen den beiden Metallelektroden in Abhängigkeit von der relativen Oberflächenfeuchte während Betauungstests auf einer sauberen Solarmoduloberfläche bei 23°C Umgebungstemperatur und relativen Luftfeuchten zwischen 33 % und 53 % dargestellt ist.

Die Regelung der Heizeinrichtung erfolgt bei dem vorgeschlagenen Verfahren vorzugsweise derart, dass ein der relativen Oberflächenfeuchte von etwa 60% (± 10%) entsprechender Stromfluss aufrechterhalten oder zumindest nicht überschritten wird. Mit einer derartigen Regelung der Heizeinrichtung lässt sich die Betauung zuverlässig und kosteneffizient vermeiden. So besteht beispielsweise die Möglichkeit, die während tagsüber herrschender Trockenbedingungen erhaltenen Werte der Strommessung heranzuziehen, um einen durch Feuchtebildung am Abend oder in der Nacht erfolgenden Stromanstieg zu erkennen und als Auslöser für die Zuschaltung und ggf. anschließende Regelung der Heizeinrichtung heranzuziehen. Dies kann über einen geeigneten Algorithmus erfolgen.

Aus der zeitlichen Variabilität der relativen Oberflächenfeuchte wird mit der elektrischen Oberflächenleitfähigkeit ein Regelungsparameter für die effiziente feuchtigkeitsgesteuerte Beheizung von PV-Moduloberflächen zur Verfügung gestellt. Besonders vorteilhaft erfolgt die Beheizung bei PV-Modulen über die bereits vorhandenen elektrischen Anschlüsse der PV-Module, die zur Stromabnahme bei Sonneneinstrahlung dienen. Dies ist beispielhaft in Figur 1 erkennbar, in der die Heizeinrichtung mit einer Heizspannungsquelle U_{heiz} in Verbindung dargestellt ist. Die PV-Module 6 können hierbei ohne zusätzliche Hardware einfach durch eine Bestromung der Solarzellen 3 in Durchlassrichtung (Vorwärtsbestromung) beheizt werden. Damit ist die aktive Beheizung auf Nachstunden beschränkt, wenn die Anlage keine elektrische Energie produziert. Der Schalter 9 wird dabei geöffnet, sobald die Energieproduktion durch Sonnenbestrahlung beendet ist. Als Kriterium für den morgendlichen Zeitpunkt für das Schließen dieses Schalters 9 zum Wechselrichter 10 kann das Überschreiten einer gewissen Leerlaufspannung durch die zunehmende Beleuchtung der Solarzellen herangezogen werden. Die Heizeinrichtung wird dabei über eine mit der Messanordnung verbundene Steuer- und Regeleinrichtung 11 gesteuert, die in der Figur 1 lediglich durch den gestrichelten Kasten angedeutet ist.

### Bezugszeichenliste

- 1: Modulglas
- 2: Verkapselungsmaterial
- 3: Solarzellen
- 4: Rückseitenfolie
- 5: Modulrahmen
- 6: PV-Modul
- 7: Elektroden
- 8: Strommesseinrichtung
- 9: Schalter
- 10: Wechselrichter
- 11: Steuer- und Regeleinrichtung

## Patentansprüche

1. Verfahren zur Reduzierung der Feuchtebildung an einer dielektrischen Oberfläche eines Objekts (6), insbesondere an der Oberfläche eines Photovoltaikmoduls,
bei dem die Oberfläche mit einer steuerbaren Heizeinrichtung zeitweise beheizt wird,
**dadurch gekennzeichnet,**
**dass** zwischen wenigstens zwei auf der Oberfläche in einem Abstand zueinander applizierte Elektroden (7) oder zwischen einer auf der Oberfläche applizierten Elektrode und einem als weiterer Elektrode an der Oberfläche nutzbaren Bestandteil des Objekts eine elektrische Spannung angelegt und ein Stromfluss über die Elektroden (7) detektiert und/oder gemessen wird, und dass die Heizeinrichtung in Abhängigkeit von dem detektierten und/oder gemessenen Stromfluss so gesteuert wird, dass sie bei Überschreiten eines vorgegebenen Schwellwertes des Stromflusses die Oberfläche beheizt bis der Stromfluss wieder unter den Schwellwert abgefallen ist, oder geregelt wird, um einen vorgegebenen Wert des Stromflusses einzuhalten, wobei der vorgegebene Wert oder Schwellwert des Stromflusses so gewählt wird, dass er einer relativen Oberflächenfeuchte im Bereich von 50% bis 70% entspricht.

2. Verfahren nach Anspruch 1,
**dadurch gekennzeichnet,**
**dass** der vorgegebene Wert oder Schwellwert des Stromflusses so gewählt wird, dass er einer relativen Oberflächenfeuchte im Bereich von 60% ± 5% entspricht.

3. Verfahren nach Anspruch 1 oder 2,
**dadurch gekennzeichnet,**
**dass** als elektrische Spannung eine Gleichspannung oder einer derart niederfrequente Wechselspannung angelegt wird, dass damit ein ohmscher Widerstand zwischen den Elektroden (7) gemessen werden kann.

4. Verfahren nach einem der Ansprüche 1 bis 3 zur Reduzierung der Feuchtebildung an der Oberfläche eines Photovoltaikmoduls mit mehreren Solarzellen (3), bei dem die Beheizung der Oberfläche durch eine Bestromung der Solarzellen (3) des Photovoltaikmoduls in Durchlassrichtung erfolgt.

5. Anordnung zur Reduzierung der Feuchtebildung an der Oberfläche eines Objekts, insbesondere eines Photovoltaikmoduls, die
- eine steuerbare Heizeinrichtung, mit der die Oberfläche des Objekts (6) beheizbar ist,
- eine Messanordnung aus wenigstens zwei an der Oberfläche des Objekts (6) in einem Abstand zueinander applizierten Elektroden (7) oder aus wenigstens einer auf der Oberfläche applizierten Elektrode und einem als weiterer Elektrode an der Oberfläche nutzbaren Bestandteil des Objekts, einer mit den Elektroden (7) verbundenen elektrischen Spannungsquelle, über die wenigstens zeitweise eine elektrische Spannung an die Elektroden (7) angelegt werden kann, und einer Strommesseinrichtung (8) zur Messung und/oder Detektion eines Stromflusses über die Elektroden (7), und
- eine Steuer- und/oder Regeleinrichtung aufweist, **dadurch gekennzeichnet dass** die Steuer- und/oder Regeleinrichtung die Heizeinrichtung in Abhängigkeit von dem gemessenen und/oder detektierten Stromfluss gemäß dem Verfahren nach Anspruch 1 oder 2 steuert und/oder regelt.

6. Anordnung nach Anspruch 5,
**dadurch gekennzeichnet,**
**dass** die Heizeinrichtung bei Verwendung der Anordnung an einem Photovoltaikmodul eine Heizspannungsquelle aufweist, die so mit elektrischen Anschlüssen des Photovoltaikmoduls verbunden ist, die bei Sonnenbestrahlung zur Stromabnahme dienen, dass das Photovoltaikmodul über die Heizspannungsquelle in Durchlassrichtung bestromt werden kann.

7. Anordnung nach Anspruch 5 oder 6,
**dadurch gekennzeichnet,**
**dass** die elektrische Spannungsquelle eine Gleichspannungsquelle oder eine derart niederfrequente Wechselspannungsquelle ist, dass über den zwischen den Elektroden erzeugten Stromfluss ein ohmscher Widerstand zwischen den Elektroden (7) gemessen werden kann.

8. Photovoltaikmodul mit einer Anordnung nach einem der Patentansprüche 5 bis 7.

## Claims

1. A method for reducing the buildup of moisture on a dielectric surface of an object (6), in particular on the surface of a photovoltaic module,
in which the surface is heated intermittently by a controllable heating device,
**characterized in that**
an electrical voltage is applied between at least two electrodes (7) applied to the surface with a spacing between them, or between an electrode applied to the surface and a component of the object which can be used as a further electrode on the surface, and a current flow across the electrodes (7) is detected and/or measured, and that the heating device is controlled according to the detected and/or measured current flow in such manner that when a predetermined threshold value of the current flow is exceeded it heats the surface until the current flow has fallen below the threshold value again, or is regulated to maintain a predetermined value for the current flow, wherein the predetermined value or threshold value of the current flow is chosen such that it corresponds to a relative surface humidity in the range from 50 % to 70 %.

2. The method according to Claim 1,
**characterized in that**
the predetermined value or threshold value of the current flow is chosen such that it corresponds to a relative surface humidity in the range of 60 % ± 5 %.

3. The method according to Claim 1 or 2,
**characterized in that**
the electrical voltage applied is a DC voltage or an AC voltage with a frequency low enough to enable it to be used to measure an ohmic resistance between the electrodes (7).

4. The method according to any one of Claims 1 to 3 for reducing the buildup of moisture on the surface of a photovoltaic module with a plurality of solar cells (3), in which heating of the surface is effected by passing a current through the solar cells (3) of the photovoltaic module in a forward-biased direction.

5. An arrangement for reducing the buildup of moisture on the surface of an object, in particular of a photovoltaic module, which includes
- a controllable heating device with which the surface of the object (6) can be heated,
- a measuring arrangement consisting of at least two electrodes (7) applied to the surface of the object (6) with a spacing between them, or consisting of at least one electrode applied to the surface and a component of the object that can be used as a further electrode on the surface, an electrical voltage source connected to the electrodes (7), by which an electrical voltage can be applied to the electrodes (7) at least intermittently, and a current measurement device (8) for measuring and/or detecting a current flow across the electrodes (7), and
- a device for open- and/or closed-loop control, **characterized in that**
the device for open- and/or closed-loop control controls and/or regulates the heating device as a function of the current flow detected and/or measured according to the method according to Claim 1 or 2.

6. The arrangement according to Claim 5,
**characterized in that**
when the arrangement is used on a photovoltaic module, the heating device has a heater voltage source which is connected to electrical connections of the photovoltaic module that serve to draw current when irradiated with sunlight in such manner that a current can be passed through the photovoltaic module in the forward-biased direction via the heater voltage source.

7. The arrangement according to Claim 5 or 6, **characterized in that**
the electrical voltage source is a DC voltage source or an AC voltage source with a frequency low enough to enable an ohmic resistance between the electrodes (7) to be measured via the current flow generated between the electrodes.

8. A photovoltaic module having an arrangement according to any one of Claims 5 to 7.

## Revendications

1. Procédé pour réduire la formation d'humidité sur une surface diélectrique d'un objet (6), en particulier sur la surface d'un module de panneau photovoltaïque,
dans lequel la surface est chauffée avec un élément chauffant contrôlable à certains moments,
**caractérisé en ce que**
entre au moins deux électrodes (7) appliquées à distance l'une de l'autre sur la surface ou entre une électrode appliquée sur la surface et un composant de l'objet qui peut être utilisé comme électrode supplémentaire sur la surface une tension électrique est appliquée, et un flux de courant à travers les électrodes (7) est détecté et/ou mesuré, et que le dispositif de chauffage est commandé en fonction du flux de courant détecté et/ou mesuré, de sorte que lorsqu'une valeur seuil prédéterminée du flux de courant est dépassée, la surface est chauffée jusqu'à ce que le flux de courant soit redescendu en dessous de la valeur seuil, ou est régulé afin de maintenir une valeur prédéterminée du flux de courant, dans lequel la valeur prédéterminée ou la valeur seuil du flux de courant est choisie de manière à ce qu'elle corresponde à une humidité relative de surface dans la plage de 50 % à 70 %.

2. Procédé selon la revendication 1,
**caractérisé en ce que**
la valeur prédéterminée ou la valeur de seuil du flux de courant est choisie de telle sorte qu'elle corresponde à une humidité relative de surface dans la plage de 60 % ± 5 %.

3. Procédé selon la revendication 1 ou 2,
**caractérisé en ce que**
la tension électrique appliquée est une tension continue ou une tension alternative à basse fréquence telle qu'une résistance ohmique entre les électrodes (7) puisse être mesurée avec elle.

4. Procédé selon une des revendications 1 à 3 pour réduire la formation d'humidité à la surface d'un module photovoltaïque comportant plusieurs cellules solaires (3), dans lequel le chauffage de la surface a lieu en alimentant les cellules solaires (3) du module photovoltaïque dans le sens direct.

5. Dispositif pour réduire la formation d'humidité à la surface d'un objet, en particulier un module photovoltaïque, qui présente
- un appareil de chauffage contrôlable avec lequel la surface de l'objet (6) peut être chauffée,
- un dispositif de mesure composé d'au moins deux électrodes (7) appliquées sur la surface de l'objet (6) à distance les unes aux autres et un composant de l'objet pouvant être utilisé comme électrode supplémentaire sur la surface, une source de tension électrique connectée aux électrodes (7), via laquelle au moins à certains moments une tension électrique peut être appliquée aux électrodes (7), et un dispositif de mesure de courant (8) pour mesurer et/ou détecter un flux de courant à travers les électrodes (7), et
- un dispositif de commande et/ou de régulation, **caractérisé en ce que** le dispositif de commande et/ou de régulation commande et/ou régule le dispositif de chauffage en fonction du flux de courant mesuré et/ou détecté conformément au procédé selon la revendication 1 ou 2.

6. Dispositif selon la revendication 5,
**caractérisé en ce que**
le dispositif de chauffage lors de l'utilisation du dispositif sur un module photovoltaïque présente une source de tension de chauffage, qui est reliée aux connexions électriques du module photovoltaïque, de telle sorte qu'elles servent à l'accumulation de courant lors l'exposition au soleil, que le module photovoltaïque puisse être alimenté via la source de tension de chauffage dans le sens direct.

7. Dispositif selon la revendication 5 ou 6,
**caractérisé en ce que**
la source de tension électrique est une source de tension continue ou une source de tension alternative à basse fréquence telle que via le flux de courant généré entre les électrodes, une résistance ohmique puisse être mesurée entre les électrodes (7).

8. Module photovoltaïque comportant un dispositif selon une des revendications 5 à 7.
